(19) Europäisches Patentamt
European Patent Office
Office européen des brevets

(11) Veröffentlichungsnummer: **0 208 858**
**B1**

(12) # EUROPÄISCHE PATENTSCHRIFT

(45) Veröffentlichungstag der Patentschrift: **08.02.89**

(51) Int. Cl.[4]: **C08G 73/02,** A01N 59/20, A01N 25/10

(21) Anmeldenummer: **86106366.7**

(22) Anmeldetag: **09.05.86**

(54) **Kupferhaltige Polymere, Verfahren zur ihrer Herstellung und ihre Anwendung als Fungizide.**

(30) Priorität: **20.06.85 DE 3522000**

(43) Veröffentlichungstag der Anmeldung: **21.01.87 Patentblatt 87/4**

(45) Bekanntmachung des Hinweises auf die Patenterteilung: **08.02.89 Patentblatt 89/6**

(84) Benannte Vertragsstaaten: **AT BE CH DE FR GB IT LI LU NL SE**

(56) Entgegenhaltungen:
**EP-A- 0 039 788**
**AT-B- 349 269**
**DE-A- 2 756 431**
**DE-A- 2 809 244**
**DE-A- 3 045 251**
**DE-C- 3 432 569**
**GB-A- 1 394 990**
**US-A- 4 098 602**

(73) Patentinhaber: **Benckiser-Knapsack GmbH, Dr. Albert-Reimann-Strasse 2, D-6802 Ladenburg(DE)**

(72) Erfinder: **Kleemann, Stephan G. Dr. Dipl.-Chem., Mozartstrasse 25, D-6905 Schriesheim(DE)**
Erfinder: **Claus, G. Günter, Dr. Dipl.-Lebensmittel-Techn., Lerchenweg 24, D-6803 Edingen(DE)**

(74) Vertreter: **Grussdorf, Jürgen, Dr. et al, Patentanwälte Zellentin & Partner Rubensstrasse 30, D-6700 Ludwigshafen(DE)**

**EP 0 208 858 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind kupferhaltige Aminpolymerisate, Verfahren zu ihrer Herstellung sowie ihre Anwendung als Fungizide.

Die Verwendung von Kupfersalzen in der Landwirtschaft zur Bekämpfung von Pilzkrankheiten an Kulturpflanzen wird bereits seit langem praktiziert. Um die Wirksamkeit der Kupferbehandlung über einen längeren Zeitraum zu garantieren, wurden früher in Wasser schwer oder unlösliche anorganische Kupfersalze verwendet, z.B. Kupferoxichlorid. Weiterhin sind ölige Formulierungen von Kupfersalzen auf Basis niedermolekularer, organischer Carbonsäuren bekannt geworden, die allerdings bei ansonsten gleicher Wirksamkeit einen erheblich niedereren Kupfergehalt besitzen und wegen der öligen Basis für die Behandlung von Pflanzen weniger geeignet sind.

Aus der DE-A 2 807 293, der US-P 3 900 504, der GB-C 599 443 und der GB-C 593 416 sowie der DE-A 2 202 448 werden daher fungizide Mittel beschrieben, bei denen an sich schwer lösliche Kupfersalze organischer Säuren durch Komplexbildung mit Ammoniak in wäßrige Lösung gebracht werden. Nach dem Aufbringen dieser wäßrigen Lösungen auf die zu behandelnden Oberflächen, insbesondere Kulturpflanzen, verdampft mit dem Lösungsmittel auch das Ammoniak, so daß sich die schwer löslichen Kupfersalze zurückbilden und eine langsame Freigabe von Kupferionen und damit eine lang anhaltende fungizide Wirkung bewirken.

Da diese Salze auf den Pflanzenoberflächen nur schlecht haften, so daß sie zwar vom Regen nicht abgelöst, aber als Feststoff abgewaschen werden, ist in den vorstehenden Literaturstellen die Eignung dieser Substanzen als Fungizide überwiegend nur für die Behandlung von Textilien und Holz beschrieben und über die Brauchbarkeit im Pflanzenschutz nichts ausgesagt.

Besser haftende Kupfersalze werden gemäß GB-C 1 394 990 und EP-B 0 039 788 dadurch erhalten, daß man Kupfersalze von Polycarbonsäuren (Acrylsäure-oder Methacrylsäurepolymerisate) mit Ammoniak in die wasserlöslichen, komplexen Kupferverbindungen überführt und in dieser Form appliziert. Wiederum bildet sich auf der Blattoberfläche durch Verdampfen des Ammoniaks das schwer lösliche Kupfersalz zurück, aus dem Kupferionen mit fungizider Wirkung langsam freigesetzt werden. Nachteilig an diesen Lösungen ist es, daß zur Erzielung einer ausreichenden Komplexierung der Kupferionen ein erheblicher Überschuß an Ammoniak zugegeben werden muß, so daß die Lösungen stark alkalisch reagieren und bei der Applikation die Pflanze schädigen und andererseits durch das Verdampfen des Ammoniaks eine erhebliche Geruchsbelästigung auftritt.

Aus der DE- A 3 045 251 sind Kunstharze mit komplexgebundenem Kupfer bekannt, welche aus epoxidgruppenfreien Mannich-Basen hergestellt werden, die als Pigmente, Härtungskatalysatoren, Antischaummittel oder Haftverbesserer dienen. Über eine Verwendung als Fungizid wird keine Aussage getroffen.

Es stellte sich daher die Aufgabe, Kupferpräparate zu finden, die insbesondere als Fungizide in der Landwirtschaft eingesetzt werden können und die ohne bzw. mit vergleichbaren geringen Ammoniakzusätzen auskommen und trotzdem auf der Blattoberfläche festhaftende Überzüge ergeben.

Es wurde nun überraschenderweise gefunden, daß Kupferaminkomplexe von Polyamidaminen, gegebenenfalls unter Zusatz von bis zu 25% Ammoniak, bezogen auf die Menge des Polyamidamins, in hohem Maße befähigt sind, stabile, wäßrige Kupferkomplexlösungen zu bilden und daß derartige Kupferkomplexlösungen gute fungizide Eigenschaften im Vergleich zu anorg. Kupfersalzen sowie Kupferpolyacrylat oder Kupfercarbonsäurepräparaten aufweisen. Im Gegensatz zu den vorbekannten Präparaten liegt das Kupferion nicht nur in der wäßrigen Lösung, sondern auch nach der Applikation auf die zu schützende Oberfläche in Form des Polymeraminkomplexes vor, aus dem das Kupfer langsam und gleichmäßig an die Pflanze abgegeben wird.

Polyamidamine im Sinne der Erfindung sind Polymere, welche sowohl freie oder substituierte Amidgruppen als auch freie oder substituierte Amingruppen enthalten.

Definitionsgemäß enthalten Polyamidamine also folgende Strukturelemente:

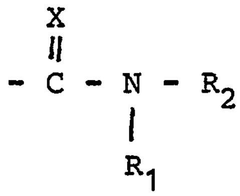 , 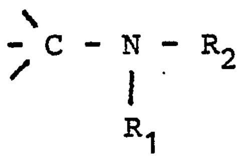 ,

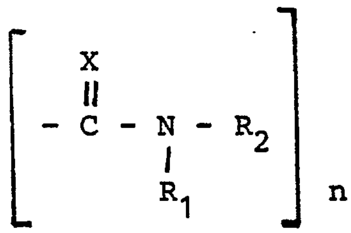 , 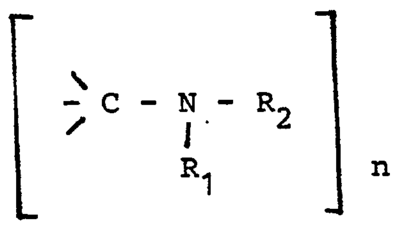

mit $R_1$ $R_2$ = H, substituierte oder unsubstituierte, lineare, cyclische oder verzweigte, gesättigte oder ungesättigte Alkyl, Aryl, Aralkyl und X = Sauerstoff oder Schwefel

Die Erfindung ist durch die Ansprüche näher gekennzeichnet.

Die Herstellung der erfindungsgemäßen Kupferaminkomplexe erfolgt am einfachsten durch Zugabe eines leicht löslichen Kupfersalzes, wie beispielsweise Kupfer(II)-acetat, Kupfer(II)-sulfat oder anderer gebräuchlicher Kupferverbindungen, fest oder in Form von Lösungen, zu einer wäßrigen Lösung des Polyamidamins. Sie kann auch durch Umsetzung von Kupfersalzen schwacher oder leicht flüchtiger Säuren mit den Polyamidaminen erfolgen. Die Konzentration der Reaktionspartner wird dabei in annähernd molarem Verhältnis eingestellt. Ein größerer Überschuß an Kupfer(II)-salz ist ungünstig, ein Überschuß an Ammoniak oder Polyamidamin stört nicht, ein Unterschuß führt jedoch zu Fällungen, insbesondere beim Verdünnen mit Wasser auf anwendungsgerechte Konzentrationen.

Die Herstellung erfolgt üblicherweise bei Temperaturen von 20–100°C, vorzugsweise bei erhöhter Temperatur insbesondere bei Temperaturen von 30–60°C.

Die zu verwendenden Polyamidamine sind bekannte Verbindungen, die nach den üblichen Verfahren der Substanz-, Lösungs-, Fällungs-, Emulsions- oder Suspensionspolymerisation sowie durch gezielte Abbaureaktionen, wie z.B. in der eigenen deutschen Patentanmeldung DE-Cl 3 432 569 beschrieben ist, erhalten werden können. Auf den Inhalt dieser Patentanmeldung wird hiermit Bezug genommen.

Trägt man das erfindungsgemäße, auf Anwendungskonzentrationen verdünnte Pflanzenschutzmittel auf zu behandelnde Gegenstände, Pflanzen oder Pflanzenteile auf, so entsteht beim Auftrocknen der Lösung ein in Wasser schwer oder nicht löslicher Kupfer-Polymerfilm, welcher fest auf dem Gegenstand oder der Pflanze haftet und seine fungizide Wirkung über einen langen Zeitraum beibehält.

Es ist nicht erforderlich, die kupferhaltigen Polymere in reiner Form als Pflanzenschutzmittel zu verwenden.

Die neuen Komplexe besitzen eine ausgezeichnete fungizide Langzeitwirkung, welche die von bislang bekannten kupferhaltigen Fungiziden übertrifft. Sie sind daher überall dort einsetzbar, wo unerwünschter Bewuchs oder Befall durch Mikroorganismen auftritt.

Die Wirkstoffe und die damit zubereiteten Mittel zeichnen sich durch eine sehr gute Pflanzenverträglichkeit aus. Weiterhin besitzen die neuen Pflanzenschutzmittel den Vorteil, daß sie aus rein wäßriger Lösung angewendet werden können. Es treten daher bei ihrer Verwendung geringere Umweltbelastungen auf als bei der Behandlung mit bekannten Kupfer-Verbindungen.

Die erfindungsgemäßen Mittel können weiterhin übliche Zusatzstoffe wie Netzmittel, Stabilisatoren, Antioxidantien sowie gegebenenfalls auch andere Wirkstoffe, wie Herbizide, Insektizide, Wachstumsregulatoren oder andere Fungizide enthalten, so daß eine Applikation mit diesen Mitteln in einem Arbeitsgang möglich ist.

Die erfindungsgemäßen Lösungen enthalten Kupfer vorzugsweise in einer Menge von 0,01–10%, wobei für die Verwendung als Pflanzenschutzmittel üblicherweise Konzentrationen von 0,01–0,5% ausreichend sind. Höher konzentrierte Lösungen werden deshalb normalerweise vor der Applikation mit Wasser oder waßrigen Losungen anderer Wirkstoffe verdünnt.

Als Maß für das Retentionsverhalten des Polymers fur das komplex gebundene Kupfer wurde der Kupfergehalt vor und nach der ausgiebigen Behandlung mit Wasser bestimmt. Dabei wurde wie folgt vorgegangen:

Von der jeweiligen Kupfer-Polymerlösung wurden 0,2 bis 0,4 g auf einem Filterpapier als dünner Film getrocknet. Anschließend wurde das Filterpapier in 100 ml dest. Wasser gelegt (250- bis 500-facher Überschuß) und durch Titration ermittelt, welche Menge an Kupfer innerhalb von 3 Stunden in Lösung ging. Die Bestimmung wurde folgendermaßen durchgeführt:

a) das Filterpapier wurde mit einer Pinzette aus der Lösung genommen, Papier und Pinzette abgespült, mit 5 g Natrium acetat gepuffert und danach mit 0,05 M $Na_2EDTA$-Lösung titriert,

b) das Filterpapier wurde mit einer Pinzette aus der Lösung genommen, Papier und Pinzette abgespült, mit verdünnter Salzsäure (1:1) stark sauer gestellt, 5 g Natriumacetat zugegeben und mit konz. Ammoniak auf pH 5,7 gestellt. Danach wurde, wie unter a) beschrieben, titriert,

c) die Bestimmung wurde wie unter b) beschrieben durchgeführt, es wurde jedoch die Lösung abdekantiert, das Filterpapier herausgenommen und das Becherglas ausgespült.

Die Ergebnisse der Titrationen nach diesen drei Methoden sind in der Tabelle I wiedergegeben. Dabei beziehen sich die Angaben der besseren Anschaulichkeit wegen direkt auf den prozentualen Anteil an Kupfer, welcher unter den vorgegebenen Bedingungen vom Polymer zurückgehalten wird.

Der K-Wert wird nach H.Fikentscher, Cellulosechemie 13, S. 48–64 sowie 71–74 (1932) bei 30°C bestimmt. Dabei bedeutet $K = k \times 1000$.

Die Bestimmung des K-Wertes des Acrylnitril-Copolymerisates erfolgt in Dimethylformamid.
Der K-Wert des Umsetzungsproduktes mit Ethylendiamin, Triethylenglykol und Katalysator erfolgt, nach Ausfällung des Polymeren im Überschuß an Aceton und Trocknung im Vakuum bei 50°C, in Natriumnitrat-Lösung. Die Konzentration beträgt 0,5 g ausgefälltes Polymerisat in 100 ml 1 N Natriumnitrat-Lösung.
Alle Mengenangaben beziehen sich auf Gewichte.

Die folgenden Beispiele sollen die Erfindung erläutern.

Beispiel 1

In einem 500 ml Dreihalskolben mit KPG-Rührer und Rückflußkühler werden 0,32 g Schwefel in 33,1 g Ethylendiamin vorgelegt und unter Rühren mit 33,1 g Triethylenglykol vermengt. Anschließend werden 26,5 g Polyacrylnitrilfasern mit einem Gehalt von 7% Allylsulfonat und einem K-Wert von 82,9 zugegeben und das Gemisch auf eine Badtemperatur von 170°C erwärmt. Nach 2,7 Stunden bei dieser Temperatur wird das entstandene Produkt mit 75 g Wasser versetzt und weitere 30 Minuten bei 50°C gehalten. Nach Abkühlen auf Zimmertemperatur und Zugabe von 1,1 g $H_2O_2$ in 4,5 g Wasser wird 30 Minuten auf 100°C erwärmt, mit zusätzlichem Wasser auf eine Konzentration von 4,6% verdünnt und dann über ein 0,1 mm Sieb von ungelösten Partikeln abgetrennt.

Zu 20 Teilen einer Lösung dieses Polyamidamins gemäß DE-Cl 3 432 569 mit einem K-Wert von 34,1 werden bei 50°C 1,57 Teile Kupfer(II)acetat × 1 $H_2O$ portionsweise eingetragen und bei dieser Temperatur 15 Minuten gerührt.

Es resultiert eine stabile blaugrüne Lösung mit einem Kupfergehalt von 2,3%.

Beispiel 2

In einem 500 ml Dreihalskolben mit KPG-Rührer und Rückflußkühler werden 0,32 g Schwefel in 33,1 g Ethylendiamin vorgelegt und unter Rühren mit 63,1 g Triethylenglykol vermengt. Anschließend werden 26,5 g Polyacrylnitrilfasern mit einem Gehalt von 7% Allylsulfonat und einem K-Wert von 80,5 zugegeben und das Gemisch auf eine Badtemperatur von 170°C erwärmt. Nach 2.7 Stunden bei dieser Temperatur wird das entstandene Produkt mit 75 g Wasser versetzt und weitere 30 Minuten bei 50°C gehalten. Nach Abkühlen auf Zimmertemperatur und Zugabe von 1,1 g $H_2O_2$ in 4,5 g Wasser wird 30 Minuten auf 100°C erwärmt, mit zusätzlichem Wasser auf eine Konzentration von 4,9% verdünnt und dann über ein 0,1 mm Sieb von ungelösten Partikeln abgetrennt.

Zu 20 Teilen einer Lösung dieses Polyamidamins gemäß DE-Cl 3 432 569 mit einem K-Wert von 33,5 werden bei 50°C 1,57 Teile Kupfer(II)acetat × 1 $H_2O$ portionsweise eingetragen und bei dieser Temperatur 15 Minuten gerührt.

Es resultiert eine stabile blaugrüne Lösung mit einem Kupfergehalt von 2,3%.

Beispiel 3

In einem 500 ml Dreihalskolben mit KPG-Rührer und Rückflußkühler werden 0,32 g Schwefel in 33,1 g Ethylendiamin vorgelegt und unter Rühren mit 63,1 g Triethylenglykol vermengt. Anschließend werden 26,5 g Polyacrylnitrilfasern mit einem Gehalt von 7% Allylsulfonat und einem K-Wert von 82,9 zugegeben und das Gemisch auf eine Badtemperatur von 175°C erwärmt. Nach 3 Stunden bei dieser Temperatur wird das entstandene Produkt mit 75 g Wasser versetzt und weitere 30 Minuten bei 50°C gehalten. Nach Abkühlen auf Zimmertemperatur und Zugabe von 1,1 g $H_2O_2$ in 4,5 g Wasser wird 30 Minuten auf 100°C erwärmt, mit zusätzlichem Wasser auf eine Konzentration von 5,4% verdünnt und dann über ein 0,1 mm Sieb von ungelösten Partikeln abgetrennt.

Zu 20 Teilen einer Lösung dieses Polyamidamins gemäß DE-Cl 3 432 569 mit einem K-Wert von 25,8 werden bei 50°C 1,57 Teile Kupfer(II)acetat × 1 $H_2O$ portionsweise eingetragen und bei dieser Temperatur 15 Minuten gerührt.

Es resultiert eine stabile blaugrüne Lösung mit einem Kupfergehalt von 2,3%.

Beispiel 4

In einem 500 ml Dreihalskolben mit KPG-Rührer und Rückflußkühler werden 0,32 g Schwefel in 33,1 g Ethylendiamin vorgelegt und unter Rühren mit 93,1 g Triethylenglykol vermengt. Anschließend werden 26,5 g Polyacrylnitrilfasern mit einem Gehalt von 7% Allylsulfonat und einem K-Wert von 82,9 zugegeben und das Gemisch auf eine Badtemperatur von 170°C erwärmt. Nach 3,5 Stunden bei dieser Temperatur wird das entstandene Produkt mit 70 g Wasser versetzt und weitere 30 Minuten bei 50°C gehalten. Nach Zugabe von 1,1 g $H_2O_2$ in 4,5 g Wasser wird 30 Minuten auf 100°C erwärmt, mit zusätzlichem Wasser auf eine Konzentration von 22% verdünnt und dann über ein 0,1 mm Sieb von ungelösten Partikeln abgetrennt.

Zu 10 Teilen einer Lösung dieses Polyamidamins gemäß DE-Cl 3 432 569 mit einem K-Wert von 23,0 werden unter Zusatz von 10 Teilen Wasser bei 50°C 3,21 Teile Kupfer(II)acetat × 1 $H_2O$ portionsweise eingetragen und bei dieser Temperatur 15 Minuten gerührt.

Es resultiert eine stabile grünliche Lösung mit einem Kupfergehalt von 4,4%.

Beispiel 5

Zu 13 Teilen einer Lösung aus 22 Teilen eines entsprechend Beispiel 4 hergestellten Polyamidamins gemäß DE-Cl 3 432 569 mit einem K-Wert von 25,0 in 100 Teilen Wasser, werden unter Zusatz von 7 Teilen Wasser bei 50°C 3,74 Teile Kupfer(II)acetat × 1 $H_2O$ portionsweise eingetragen und bei dieser Temperatur 15 Minuten gerührt.

Es resultiert eine stabile dunkelgrüne Lösung mit einem Kupfergehalt von 5,0%.

Beispiel 6

Zu 5 Teilen einer Lösung aus 25 Teilen eines Polyamidamins (RETAMINOL EC ® / Fa. Bayer) in 100 Teilen Wasser, werden unter Zusatz von 5 Teilen Wasser bei 50°C 0,6 Teile Kupfer(II)acetat × 1 $H_2O$ portionsweise eingetragen und bei dieser Temperatur 15 Minuten gerührt.

Es resultiert eine stabile dunkelblaue Lösung mit einem Kupfergehalt von 1,8%.

Beispiel 7

In einem 500 ml Dreihalskolben mit KPG-Rührer und Rückflußkühler werden 0,32 g Schwefel in 33,1 g Ethylendiamin vorgelegt und unter Rühren mit 93,1 g Triethylenglykol vermengt. Anschließend werden 26,5 g Polyacrylnitrilfasern mit einem Gehalt von 7% Allylsulfonat und einem K-Wert von 82,9 zugegeben und das Gemisch auf eine Badtemperatur von 175°C erwärmt. Nach 3,5 Stunden bei dieser Temperatur wird das entstandene Produkt mit 75 g Wasser versetzt und weitere 30 Minuten bei 50°C gehalten. Nach Abkühlen auf Zimmertemperatur und Zugabe von 1,1 g $H_2O_2$ in 4,5 g Wasser wird 30 Minuten auf 100°C erwärmt, mit zusätzlichem Wasser auf eine Konzentration von 28% verdünnt und dann über ein 0,1 mm Sieb von ungelösten Partikeln abgetrennt.

Zu 5 Teilen einer Lösung dieses Polyamidamins mit einem K-Wert von 22,2 werden unter Zusatz von 15 Teilen Wasser bei 50°C 1,57 Teile Kupfer(II)acetat × 1 $H_2O$ portionsweise eingetragen und bei dieser Temperatur 15 Minuten gerührt.

Es resultiert eine stabile grüne Lösung mit einem Kupfergehalt von 2,3%.

Beispiel 8

In einem 500 ml Dreihalskolben mit KPG-Rührer und Rückflußkühler werden 0,64 g Schwefel in 62,1 g Ethylendiamin vorgelegt und unter Rühren mit 62,1 g Triethylenglykol vermengt. Anschließend werden 53,1 g Polyacrylnitrilfasern mit einem Gehalt von 7% Allylsulfonat und einem K-Wert von 82,9 zugegeben und das Gemisch auf eine Badtemperatur von 175°C erwärmt. Nach 5,5 Stunden bei dieser Temperatur wird das entstandene Produkt mit 60 g Wasser versetzt und weitere 30 Minuten bei 90°C gehalten. Nach Abkühlen auf Zimmertemperatur und Zugabe von 2.3 g $H_2O_2$ in 4,5 g Wasser wird 30 Minuten auf 100°C erwärmt, mit zusätzlichem Wasser auf eine Konzentration von 41% verdünnt und dann über ein 0,1 mm Sieb von ungelösten Partikeln abgetrennt.

Zu 9,75 Teilen einer Lösung dieses Polyamidamins mit einem K-Wert von 10,9 werden unter Zusatz von 10,25 Teilen Wasser bei 50°C 6,19 Teile Kupfer(II)acetat × 1 $H_2O$ portionsweise eingetragen und bei dieser Temperatur 15 Minuten gerührt.

Es resultiert eine stabile dunkelgrüne Lösung mit einem Kupfergehalt von 7,5%.

Beispiel 9

In einem 500 ml Dreihalskolben mit KPG-Rührer und Rückflußkühler werden 0,38 g Schwefel in 39,7 g Ethylendiamin vorgelegt und unter Rühren mit 34,5 g Triethylenglykol vermengt. Anschließend werden 31,9 g Polyacrylnitrilfasern mit einem Gehalt von 7% Allylsulfonat und einem K-Wert von 80,7 zugegeben

und das Gemisch auf eine Badtemperatur von 175°C erwärmt. Nach 3 Stunden bei dieser Temperatur wird das entstandene Produkt mit 75 g Wasser versetzt und weitere 30 Minuten bei 50°C gehalten. Nach Abkühlen auf Zimmertemperatur und Zugabe von 1,1 g $H_2O_2$ in 4,5 g Wasser wird 30 Minuten auf 100°C erwärmt, mit zusätzlichem Wasser auf eine Konzentration von 20% verdünnt und dann über ein 0,1 mm Sieb von ungelösten Partikeln abgetrennt.

Zu 274 Teilen einer Lösung dieses Polyamidamins mit einem K-Wert von 22,0 werden unter Zusatz von 147 Teilen Wasser bei 50°C 79 Teile Kupfer(II)acetat × 1 $H_2O$ portionsweise eingetragen und bei dieser Temperatur 15 Minuten gerührt.

Es resultiert eine stabile dunkelgrüne Lösung mit einem Kupfergehalt von 5,0%.

Beispiel 10

(Vergleichsbeispiel)

Zu 20 Teilen einer Lösung aus 35 Teilen eines Polyacrylsäurehomopolymeren mit einem K-Wert von 22,3 in 100 Teilen Wasser, werden nach Regulierung des pH-Wertes auf 6,0 unter Zusatz von 15,3 Teilen Wasser bzw. NaOH, bei 50°C 1,2 Teile Kupfer(II)acetat × 1 $H_2O$ portionsweise eingetragen und bei dieser Temperatur 15 Minuten gerührt.

Es resultiert eine stabile dunkelgrüne Lösung mit einem Kupfergehalt von 1,1%.

Beispiel 11

(Vergleichsbeispiel)

Zu 20 Teilen einer Lösung aus 35 Teilen eines Polyacrylsäurehomopolymeren mit einem K-Wert von 22,3 in 100 Teilen Wasser, werden nach Zugabe von 10 Teilen Wasser und Regulierung des pH-Wertes auf 6,0 unter Zusatz von 11,3 Teilen 25%iger Ammoniumhydroxyd-Lösung, bei 50°C 1,2 Teile Kupfer(II)acetat × 1 $H_2O$ portionsweise eingetragen und bei dieser Temperatur 15 Minuten gerührt.

Es resultiert eine stabile dunkelblaue Lösung mit einem Kupfergehalt von 0,9%.

**Tabelle I**

| | Ungelöstes Kupfer (in %) | | |
|---|---|---|---|
| Beispiel | Methode a) | Methode b) | Methode c) |
| Nr. 1 | 23,3 | 21,3 | 21,8 |
| Nr. 2 | 23,9 | 23,0 | 22,0 |
| Nr. 3 | 22,9 | 21,2 | 18,5 |
| Nr. 4 | n.b. | 62,4 | 62,7 |
| Nr. 5 | n.b. | 47,4 | 49,9 |
| Nr. 6 | n.b. | 77,2 | 77,1 |
| Nr. 7 | 23,8 | 23,1 | 22,7 |
| Nr. 8 | n.b. | 26,3 | 30,3 |
| Nr. 9 | 52,1 | 56,3 | 58,1 |
| Nr. 10 | 0 | 0 | 0 |
| Nr. 11 | 0 | 0 | 0 |
| Kupferacetat | 0 | 0 | 0 |

n.b. = nicht bestimmt

## Patentansprüche

1. Kupferaminkomplexe, enthaltend ein wasserlösliches Kupfersalz und mindestens eine zur Komplexbildung ausreichende Menge eines Polyamidamins.

2. Kupferaminkomplex gemäß Anspruch 1, dadurch gekennzeichnet, daß 0–25 Gew.-% des Polyamidamins durch Ammoniak ersetzt sind.

3. Kupferaminkomplex gemäß Anspruch 1 oder 2, dadurch gekennzeichnet, daß das Polyamidamin in einem 1,5 bis 5fachen molaren Überschuß, bezogen auf Amingruppen zu Kupferionen, enthalten ist.

4. Kupferaminkomplex gemäß Anspruch 1–3, dadurch gekennzeichnet, daß der Komplex als wäßrige Lösung vorliegt.

5. Kupferaminkomplex gemäß Anspruch 4, dadurch gekennzeichnet, daß die Lösung eine Konzentration von 0,01–10 Gew.-%, vorzugsweise 0,1–7,5 Gew.-% aufweist.

6. Kupferaminkomplex gemäß Anspruch 1–5, dadurch gekennzeichnet, daß sie zusätzlich eine Dispersion eines Acrylsäure- bzw. Methacrylsäure-homo- bzw.-copolymeren, in einer Konzentration von 0–20 Gew.-% enthalten.

7. Verfahren zur Herstellung von Kupferaminkomplexen gemäß Ansprüohen 1–6, dadurch gekennzeichnet, daß man eine wäßrige Lösung der Kupfersalze mit einer wäßrigen Lösung des Polyamidamins mischt und gegebenenfalls wäßriges oder gasförmiges Ammoniak zufügt.

8. Verfahren nach Anspruch 7, dadurch gekennzeichnet, daß die Komponenten bei erhöhter Temperatur, vorzugsweise bei 30–60°C umgesetzt werden.

9. Verwendung von Kupferaminkomplexen gemäß einem der Ansprüche 1–6 als Fungizide, insbesondere als Pflanzenfungizide.

10. Verwendung von Kupferaminkomplexen gemäß Anspruch 9, zusammen mit Herbiziden, Insektiziden, Wachstumsregulatoren und/oder anderen Fungiziden.

**Claims**

1. Copper complexes, containing a water-soluble copper salt and at least an amount of a polyamide amine sufficient for the complex formation.

2. Copper amine complex according to claim 1, characterised in that 0–25 wt.% of the polyamide amine are replaced by ammonia.

3. Copper amine complex according to claim 1 or 2, characterised in that the polyamide amine is contained in a 1.5 to 5 fold molar excess, referred to amine groups to copper ions.

4. Copper amine complex according to claim 1–3, characterised in that the complex is present in aqueous solution.

5. Copper amine complex according to claim 4, characterised in that the solution has a concentration of 0.01–10 wt.%, preferably of 0.1–7.5 wt.%.

6. Copper amine complex according to claim 1–5, characterised in that it additionally contains a dispersion of an acrylic acid or methacrylic acid homo- or co-polymer in a concentration of 0–20 wt.%.

7. Process for the preparation of copper amine complexes according to claims 1–6, characterised in that one mixes an aqueous solution of the copper salts with an aqueous solution of the polyamide amine and possibly adds thereto aqueous or gaseous ammonia.

8. Process according to claim 7, characterised in that the components are reacted at elevated temperature, preferably at 30–60°C.

9. Use of copper amine complexes according to any of claims 1–6 as fungicide, especially as plant fungicide.

10. Use of copper amine complexes according to claim 9, together with herbicides, insecticides, growth regulators and/or fungicides.

**Revendications**

1. Complexes aminés à base de cuivre, comprenant un sel de cuivre soluble dans l'eau et au moins une quantité suffisante pour la complexation d'une polyamideamine.

2. Complexe aminé à base de cuivre suivant la revendication 1, caractérisé en ce que 0 à 25% en poids de la polyamideamine sont remplacés par de l'ammoniac.

3. Complexe aminé à base de cuivre suivant l'une des revendications 1 et 2, caractérisé en ce que la polyamideamine est contenue en un excès molaire de 1,5 à 5 fois, en ce qui concerne les groupes amines par rapport aux ions cuivres.

4. Complexe aminé à base de cuivre suivant l'une des revendications 1 à 3, caractérisé en ce que le complexe se présente sous la forme d'une solution aqueuse.

5. Complexe aminé à base de cuivre suivant la revendication 4, caractérisé en ce que la solution présente une concentration de 0,01 à 10% en poids, de préférence de 0,1 à 7,5% en poids.

6. Complexe aminé à base de cuivre suivant l'une des revendications 1 à 5, caractérisé en ce qu'il contient en supplément une dispersion d'un homopolymère ou copolymère d'acide acrylique ou respectivement d'acide méthacrylique, en une concentration de 0 à 20% en poids.

7. Procédé de préparation de complexes aminés à base de cuivre suivant l'une des revendications 1 à 6, caractérisé en ce qu'on mélange une solution aqueuse des sels de cuivre avec une solution aqueuse de la polyamideamine et en ce qu'on ajoute éventuellement de l'ammoniac en solution aqueuse ou sous forme gazeuse.

8. Procédé suivant la revendication 7, caractérisé en ce que les composants sont amenés à réagir à une température élevée, de préférence de 30 à 60°C.

9. Utilisation de complexes aminés à base de cuivre suivant l'une des revendications 1 à 6, comme fongicides, en particulier comme fongicides de végétaux.

10. Utilisation de complexes aminés à base de cuivre suivant la revendication 9, conjointement à des herbicides, des insecticides, des régulateurs de la croissance et/ou d'autres fongicides.